# EUROPÄISCHE PATENTANMELDUNG

(11) **EP 1 632 425 A1**
(43) Veröffentlichungstag der Anmeldung: **08.03.2006**
(21) Anmeldenummer: 05018652.7
(22) Anmeldetag: 27.08.2005
(51) Int. Cl.: B62D 33/06, A47C 17/80, B60P 3/38

(54) **Fahrerhaus eines Nutzfahrzeugs mit Liege**

(30) Priorität: 01.09.2004 DE 102004042278; 02.10.2004 DE 102004048137
(71) Anmelder: DaimlerChrysler AG, 70567 Stuttgart (DE)
(72) Erfinder: Mattedi, Markus, 72141 Walddorfhäslach (DE); Özkolacik, Mahir, 72768 Reutlingen (DE)

(57) **Zusammenfassung**

Die vorliegende Erfindung betrifft das Fahrerhaus eines Nutzfahrzeugs, das eine Liege (18) aufweist, an deren Unterseite eine Ablageschale (22, 22') verschwenkbar und durch eine Halteeinrichtung gehalten angeordnet ist.

## Beschreibung

Die Erfindung betrifft ein Fahrerhaus eines Nutzfahrzeugs, mit einer an der Rückwand des Fahrerhauses angeordneten Liege.

Nutzfahrzeuge sind heute in aller Regel mit komfortablen Ruhezonen einschließlich einer Liege ausgestattet, mit der der Fahrer während den Ruhezeiten über einen Schlafplatz verfügt.

Die DE 102 37 782 A1 zeigt ein Fahrerhaus eines Nutzfahrzeugs mit einem Ruhesitz und mit einer Liege, wobei die Liege in ihrer nicht genutzten Stellung zusammengeklappt auf einem Stausystem angeordnet ist und sich nach dem Ausklappen über dieses Stausystem und den Ruhesitz erstreckt und dabei an diesem abgestützt ist. Das Stausystem erstreckt sich dabei nur über einen Teil der Gesamtfläche der Liege.

Die DE 102 00 629 A1 zeigt ein System zur Einrichtung von Fahrerhäusern von Lastkraftwagen, wobei die Liege als Oberseite eines fahrzeugfesten Gehäuses ausgebildet ist, in das ein verfahrbarer Behälter eingebracht werden kann.

Der vorliegenden Erfindung liegt die Aufgabe zu Grunde, ein Fahrerhaus eines Nutzfahrzeugs mit einer Liege und einem Ablagebehälter mit möglichst großer Grundfläche bei gleichzeitig geringem Bauraum auszubilden.

Zur Lösung dieser Aufgabe wird bei einem gattungsgemäßen Fahrerhaus eines Nutzfahrzeugs eine Ausbildung mit den Merkmalen des Kennzeichens des Patentanspruchs 1 vorgeschlagen.

Die Anordnung der Ablageschale an der Unterseite der Liege führt zu einer kompakten Baueinheit, die auch als solche im Fahrerhaus angeordnet oder verlagert werden kann. Die schwenkbare Anordnung sichert in jeder Position von Liege und Ablageschale die Einheit der beiden Elemente, ohne die Zugänglichkeit der Ablageschale zu beeinträchtigen.

In vorteilhafter Ausbildung ist die Grundfläche der Ablageschale weitgehend gleich der Grundfläche der Liege. Im geschlossenen Zustand steht die Ablageschale der Liege nicht über. Bei maximaler Flächenausnutzung und identischer Grundfläche wird des Weiteren durch die Liege und die Ablageschale ein in sich kompaktes und entsprechend einfach handhabbares Element des Fahrerhauses geschaffen. Mit dieser Ablageschale mit ausreichender Fläche, auch wenn diese nicht der maximalen Fläche der Liege entspricht, besteht die Möglichkeit Kleiderstücke knitterfrei ablegen zu können.

In einer sinnvollen Alternative der Erfindung ist die Ablageschale mehrteilig ausgebildet. Bei zwei oder mehr getrennten und gegenüber der Liege verschwenkbar angeordneten einzelnen Teile der Ablageschale wird über mehrere, unabhängig voneinander zu öffnende, Ablagemöglichkeiten verfügt.

Es ist weiter günstig, die Ablageschale mittels zumindest eines Scharniers an der Unterseite der Liege schwenkbar anzuordnen, da somit ein einfaches Aufklappen der Ablageschale gegenüber der Liege möglich ist. Die um ein Scharnier erfolgende Kreisbewegung der Ablageschale erfordert nur einen minimalen freien Bauraum vor der Liege, ohne den Zugang zu der Ablageschale zu beeinträchtigen.

Zur Begrenzung der Schwenkbewegung der Ablageschale gegenüber der Liege und zur Verhinderung eines unkontrollierten Wegklappens der Ablageschale, das zum Herausfallen der in der Ablageschale befindlichen Gegenstände führen könnte, ist die Schwenkbewegung durch eine zusätzliche Halteeinrichtung begrenzt, wobei weiter mit Vorteil die Halteeinrichtung zumindest ein Fangseil aufweist. Eine solche Halteeinrichtung ist sowohl an der Liege als auch an der Ablageschale befestigt und in der Regel zwischen einer minimalen und einer maximalen Länge frei veränderlich, wobei die maximale Länge die Schwenkbewegung zwischen Ablageschale und Liege begrenzt.

In sinnvoller Weiterbildung der Erfindung weisen die Liege und die Ablageschale jeweils Mittel auf, mit denen die beiden jeweiligen Teile in einer zusammengeführten Stellung verbindbar sind. Mit diesen Mitteln wird die Ablageschale durch die Liege in Art eines Deckels verschlossen und die in der Ablageschale befindlichen Gegenstände geschützt. Ablageschale und Liege bilden in dieser zusammengeführten Position eine kompakte Einheit. Weiter mit Vorteil weisen die Mittel einen Schließmechanismus auf, wodurch die Kombination aus Ablageschale und Liege zu einem abschließbaren Behältnis wird.

Weitere Vorteile und Merkmale der erfindungsgemäßen Ausgestaltung sind der Beschreibung zu den Ausführungsbeispielen sowie den einzelnen Patentansprüchen zu entnehmen.

In der Zeichnung zeigt:
- Fig. 1: ein Fahrerhaus mit Liege in teilweiser, geschnittener Draufsicht,
- Fig. 2: eine Liege mit Ablageschale in perspektivischer Darstellung,
- Fig. 3: eine Liege mit zweiteilig ausgebildeter Ablageschale in perspektivischer Darstellung.

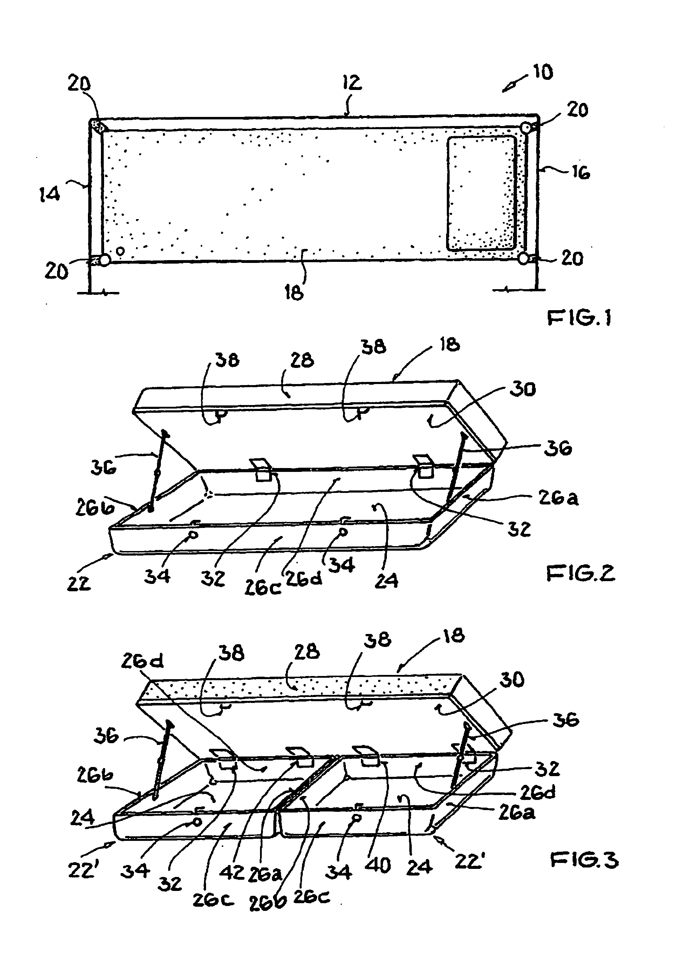

Von dem in Figur 1 gezeigten Fahrerhaus 10 ist die Rückwand 12, die Seitenwände 14, 16 und eine Liege 18 dargestellt. Bei der Liege 18 kann es sich in gleicher Weise um eine einzelne Liege in dem Fahrerhaus 10 wie auch um eine von zwei als Stockbetten ausgebildete Liegen handeln.

In dem nicht gezeigten vorderen Teil des Fahrerhauses 10 ist Raum für einen einfach oder doppelt ausgeführten Sitz sowie die Armaturentafel und das Lenkrad.

In dem gezeigten Ausführungsbeispiel ist die Liege 18 über fixe Lagerpunkte 20 an den Seitenwänden 14, 16 sowie an der Rückwand 12 des Fahrerhauses 10 angeordnet. In gleicher Weise kann die Liege aber auch beispielsweise an ihrer langen, hinteren Seite schwenkbar an der Rückwand 12 des Fahrerhauses 10 angeordnet sein, um zwischen einer aktiven Position, wie in der Figur dargestellt und einer passiven Position parallel zu der Rückwand 12 des Fahrerhauses 10 schwenkbar zu sein. Mit der Länge der Liege 18 wird fast der gesamte Abstand zwischen den sich gegenüberliegenden Seitenwänden 14, 16 des Fahrerhauses 10 als Liegefläche für den Fahrer nutzbar gemacht.

An der Unterseite der Liege 18 ist, wie in Figur 2 dargestellt, eine Ablageschale 22 angeordnet. Die Ablageschale 22 ist ein an seiner Oberseite offenes Behältnis, das in seiner Grundfläche weitestgehend mit der Grundfläche der Liege 18 übereinstimmt. Aufgebaut ist die Ablageschale 22 aus einer Bodenfläche 24 mit rechteckiger Grundfläche sowie vier sich weitgehend senkrecht zu der rechteckigen Grundfläche erstreckenden Seitenwänden 26A, 26B, 26C, 26D.

Die Liege 18 besteht im Wesentlichen aus einer Matratze 28 mit einer nicht gezeigten Unterfederung und einem Bettenunterbau 30, an dem die Matratze 28 angeordnet ist. Der Bettenunterbau 30 kann dabei auch als Rahmen ausgebildet sein, der die Matratze 28 an ihrer Unterseite und an ihren Seitenwänden umschließt. Diese Maßnahmen sollen verhindern, dass die Matratze 28 gegenüber dem an ihrer Unterseite angeordneten Teil des Bettenunterbaus 30 verrutschen kann. Der starre Bettenunterbau 30 ist über Scharniere 32 schwenkbar mit der Seitenwand 26D der Ablageschale 22 verbunden. Da der Bettenunterbau 30 als Teil der Liege 18 die weitgehend gleiche Grundfläche wie die Ablageschale 22 aufweist, dient der Bettenunterbau 30 der Ablageschale 22 als über die Scharniere 32 verschwenkbarer Deckel.

Mit der Ablageschale 22 steht eine verschließbare Ablagemöglichkeit in der Grundfläche eines normalen Bettes zur Verfügung. Dieser Ablageraum ist insbesondere geeignet, Kleidung des Fahrers in knitterfreier Ablage aufzunehmen.

Die Ablageschale 22 und der Bettenunterbau 28 weisen jeweils Mittel 34 und 38 auf, die beim Verschließen der Ablageschale durch den Bettenunterbau jeweils so in Eingriff gebracht werden können, dass der Bettenunterbau an der Ablageschale befestigt werden kann. Diese jeweiligen Mittel 34 und 38 können auch verschließbar ausgebildet sein, so dass das Fahrerhaus über eine zusätzlich abschließbare Ablageeinrichtung verfügt.

Falls es sich bei der Liege 18 um eine schwenkbar in dem Fahrerhaus angeordnete Liege handelt, kann beim Verschwenken der Liege in ihre inaktive Position die an der Liege angeordnete Ablageschale 22 in geschlossener Stellung mit verschwenkt werden. Bei dieser Ausführung sollten in der Ablageschale 22 allerdings Mittel vorgesehen sein, die ein Verrutschen der Gegenstände in der Ablageschale 22 beim Verschwenken in die Vertikale verhindern.

Die Schwenkbewegung der Ablageschale 22 gegenüber dem Bettenunterbau 30 um die Achsen der Scharniere 32 ist durch eine als Fangbänder ausgebildete Haltevorrichtung 36 begrenzt. Die zwei dargestellten Fangbänder sind sowohl an der Unterseite des Bettenunterbaus 30 als auch an jeweils einer der Seitenwände 26A, 26B der Ablageschale 22 befestigt. Bei einer horizontalen Anordnung der Liege in dem Fahrerhaus ist die Länge der Fangbänder so gewählt, dass die Öffnung zwischen Bettenunterbau 30 und Ablageschale 22 so groß ist, dass der Ablageschale 22 Gegenstände in einfacher Weise zugeführt oder entnommen werden können. Der Öffnungswinkel zwischen der Liege 18 und der Ablageschale 22 kann je nach Bedarf und Platzangebot insbesondere über die Fangbänder eingestellt werden.

Insgesamt bietet die Ablageschale 22 unter der Liege 18 einen verhältnismäßig großen zusätzlichen Stauraum, wobei der begrenzte Raum in einem Fahrerhaus eines Nutzfahrzeugs weder durch die Anordnung des Ablagebehälters noch durch den Platzbedarf beim Öffnen des Behälters unnötig beschränkt wird.

Figur 3 zeigt als Beispiel für eine mehrteilige Ausführung die Ablageschale 22' in zweigeteilter Form. Gleiche Bauteile sind mit den gleichen Bezugszeichen wie in den Figuren 1, 2 versehen.

Die beiden Hälften der Ablageschale 22' sind im Ausführungsbeispiel identisch ausgebildet, wobei auch andere Proportionen denkbar sind. Mit der mehrteiligen Ausbildung der Ablageschale 22' in zwei getrennte und auch getrennt zu öffnende Einzelschalen wird die Anzahl der Ablagemöglichkeiten erhöht, wobei die einzelnen Ablageschalen jeweils kleiner ausfallen. Mit der Anordnung von zwei getrennten Ablageschalen 22' weisen die einzelnen Schalen zusätzliche Scharniere 40, 42 auf, mit denen die Schalen zusätzlich zu den bereits vorhandenen Scharnieren 32 an der Liege 18 verschwenkbar angeordnet sind.

## Patentansprüche

1. Fahrerhaus eines Nutzfahrzeugs, mit einer an der Rückwand (12) des Fahrerhauses (10) angeordneten Liege (18),
**dadurch gekennzeichnet,**
**dass** die Liege (18) an ihrer Unterseite zumindest eine gegenüber der Liege (18) verschwenkbar angeordnete Ablageschale (22, 22') aufweist.

2. Fahrerhaus nach Anspruch 1,
**dadurch gekennzeichnet,**
**dass** die Ablageschale (22, 22') und die Liege (18) die weitgehend gleiche Grundfläche aufweisen.

3. Fahrerhaus nach Anspruch 1 oder 2,
**dadurch gekennzeichnet,**
**dass** die Ablageschale (22) einteilig ausgebildet ist.

4. Fahrerhaus nach Anspruch 1 oder 2,
**dadurch gekennzeichnet,**
**dass** die Ablageschale (22') mehrteilig ausgebildet ist.

5. Fahrerhaus nach einen der Ansprüche 1 bis 4,
**dadurch gekennzeichnet,**
**dass** die Ablageschale (22, 22') mittels zumindest eines Scharniers (32, 40, 42) an der Unterseite der Liege (18) schwenkbar angeordnet ist.

6. Fahrerhaus nach einem der Ansprüche 1 bis 5,
**dadurch gekennzeichnet,**
**dass** die Ablageschale (22, 22') durch zumindest eine zusätzliche Halteeinrichtung (36) in der Schwenkbewegung gegenüber der Liege (18) begrenzt ist.

7. Fahrerhaus nach Anspruch 6,
**dadurch gekennzeichnet,**
**dass** die Halteeinrichtung (36) zumindest ein Fangband aufweist.

8. Fahrerhaus nach einem der Ansprüche 1 bis 7,
**dadurch gekennzeichnet,**
**dass** die Liege (18) und die Ablageschale (22, 22') jeweils Mittel (34, 38) aufweisen, mit denen die beiden Teile in einer zusammengeführten Stellung verbindbar sind.

9. Fahrerhaus nach Anspruch 8,
**dadurch gekennzeichnet,**
**dass** die Mittel (34, 38) einen Schließmechanismus aufweisen.
